# EUROPÄISCHE PATENTANMELDUNG

(11) **EP 1 638 341 A2**
(43) Veröffentlichungstag der Anmeldung: **22.03.2006**
(21) Anmeldenummer: 05090252.7
(22) Anmeldetag: 01.09.2005
(51) Int. Cl.: H04N 9/097, H04N 3/38

(54) **Filmscanner für farbige Bildvorlagen**

(30) Priorität: 15.09.2004 DE 102004045559
(71) Anmelder: Deutsches Zentrum für Luft- und Raumfahrt e.V., 53175 Bonn (DE)
(72) Erfinder: Hübers, Heinz-Wilhelm, 15738 Zeuthen (DE); Eckardt, Andreas, 12524 Berlin (DE); Driescher, Hans, 15562 Rüdersdorf (DE)
(74) Vertreter: Effert, Bressel und Kollegen

(57) **Zusammenfassung**

Die Erfindung betrifft einen Filmscanner (1) für farbige Bildvorlagen, umfassend eine Weißlichtquelle, eine Filmbühne (3) und mindestens einen photosensitiven Sensor (9), wobei die Filmbühne (3) mindestens einen spaltförmigen Durchbruch aufweist, der Durchbruch von der Weißlichtquelle ausgeleuchtet wird und die farbigen Bildvorlagen über die Filmbühne (3) bewegbar sind, wobei zwischen der Filmbühne (3) und dem mindestens einen photosensitiven Sensor (9) ein Spektral-Zerlegeelement (6) angeordnet ist, mittels dessen die Abbildung der Bildvorlage spektral zerlegt wird, wobei der oder die photosensitiven Sensoren (9) derart ausgerichtet sind, dass die gewünschten Spektralbereiche auf den oder die photosensitiven Sensoren (9) treffen, sowie ein Verfahren zum Abtasten einer Bildvorlage.

## Beschreibung

Die Erfindung betrifft einen Filmscanner für farbige Bildvorlagen gemäß dem Oberbegriff des Anspruchs 1 sowie ein Verfahren zur Bildabtastung von farbigen Bildvorlagen.

Grundprinzip der meisten Filmscanner für farbige Bildvorlagen ist die Erzeugung eines R-, G- und B-Bildes, die gespeichert werden und bei der Wiedergabe wieder zu einem Farbbild zusammengesetzt werden.

Bei der Erzeugung eines R-, G- und B-Bildes existieren prinzipiell zwei verschiedene Ansätze. Bei dem ersten Ansatz ist der Filmbühne für jedes Bild ein Durchbruch zugeordnet. Bei Verwendung von spektralselektiven Beleuchtungsquellen wird dann die jeweilige Beleuchtungsquelle dem Durchbruch zugeordnet und das entsprechende spektralselektive Abbild aufgezeichnet. Bei Verwendung von Weißlichtquellen müssen dann Farbfilter entweder in die Filmbühne integriert werden oder vor den photosensitiven Sensoren. Unabhängig von der Wahl der Beleuchtungsquelle tritt dabei das Problem auf, dass die R-, G- und B-Bilder einer Szene zeitlich nacheinander aufgenommen werden. Kleinste Gleichlaufschwankungen des Filmantriebs führen dann zu Synchronisationsschwierigkeiten, die Wiedergabefehler zur Folge haben.

Bei einem zweiten Ansatz weist die Filmbühne nur einen Durchbruch auf, der mit weißem Licht beleuchtet wird. Dieser panchromatische Lichtstreifen wird mittels eines Strahlteiles in drei panchromatische Lichtstreifen aufgeteilt. Die drei Teilbilder werden dann über einen R-, G- bzw. B-Filter auf jeweils einen zeilenförmigen photosensitiven Sensor abgebildet. Bei der Verwendung nur eines Durchbruches bzw. Beleuchtungsschlitzes ergeben sich wesentliche Intensitätsverluste bei der Aufspaltung des abzutastenden Lichtspaltes in wenigsten drei Komponenten. Die Intensitätsverluste lassen sich auch nicht ohne weiteres durch eine entsprechend hellere Beleuchtung des Spaltes in der Filmbühne kompensieren, weil dann die thermische Belastung des bestrahlten Filmausschnittes zu groß wird. Daher wird die Abtastgeschwindigkeit verringert, was jedoch nachteilig ist.

Der Erfindung liegt daher das technische Problem zugrunde, einen Filmscanner zu schaffen, mittels dessen bei hoher Abtastgeschwindigkeit eine synchrone Abtastung einer farbigen Bildvorlage ermöglicht wird, sowie ein geeignetes Verfahren zur Verfügung zu stellen.

Die Lösung des technischen Problems ergibt sich durch die Gegenstände mit den Merkmalen der Ansprüche 1 und 9. Weitere vorteilhafte Ausgestaltungen der Erfindung ergeben sich aus den Unteransprüchen.

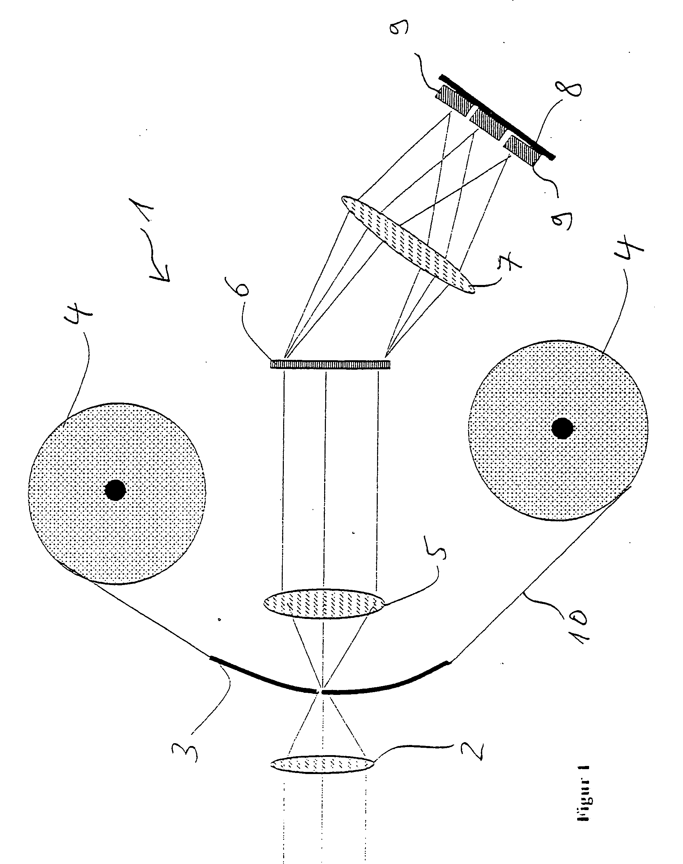

Hierzu wird zwischen der Filmbühne und dem mindestens einen photosensitiven Sensor ein Spektral-Zerlegeelement angeordnet, mittels dessen die Abbildung der Bildvorlage spektral zerlegt wird, wobei der oder die photosensitiven Sensoren derart ausgerichtet sind, dass die gewünschten Spektralbereiche auf den oder die photosensitiven Sensoren treffen. Hierdurch können die mindestens drei R-, G- und B-Aufnahmen weiterhin zeitgleich aufgenommen werden, wobei jedoch die volle Intensität spektral zur Verfügung steht. Im Gegensatz zu Ausführungsformen mit Strahlteilern kann somit mit einer dreifach höheren Abtastgeschwindigkeit gearbeitet werden (bei vergleichbarem Wärmeeintrag). Dabei müssen der oder die photosensitiven Sensoren nur derart ausgerichtet werden, dass die gewünschten Teile des Spektrums auf die Sensoren treffen.

In einer bevorzugten Ausführungsform ist das Spektral-Zerlegeelement als Prisma oder Gitter ausgebildet.

In einer weiteren bevorzugten Ausführungsform ist zwischen der Filmbühne und dem Spektral-Zerlegeelement und/oder zwischen dem Spektral-Zerlegeelement und dem photosensitiven Sensor eine Abbildungsoptik angeordnet.

In einer weiteren bevorzugten Ausführungsform ist der photosensitive Sensor als Matrix-Sensor ausgebildet. Hierdurch kann das gesamte Spektrum der Aufnahme aufgenommen werden. Zur Bildung der R-, G- und B-Bilder müssen dann nur die entsprechenden Spalten ausgewählt werden. Der besondere Vorteil dieser Anordnung ist, dass einerseits verlustfrei aufgezeichnet werden könnte, was für Archivierungszwecke sehr wichtig ist. Des Weiteren ist durch entsprechende Zusammenfassung einzelner Zeilen das jeweilige Rot-, Grün- und/oder Blau-Spektrum anpassbar. Dies ermöglicht darüber hinaus bestimmte spektrale Eigenschaften der Bildvorlage zu berücksichtigen. Beispielsweise kann eine Filmvorlage aufgrund von Alterung eine geänderte spektrale Verteilung aufweisen. Durch eine Vorab-Aufnahme eines Teils des Films (ohne Bildinhalt) kann die aktuelle spektrale Verteilung erfasst werden und durch Auswahl der entsprechenden Zeilen im Spektrum kompensiert werden. Anstelle eines Vorab-Bildes ohne Bildinhalt können auch mehrere Bilder aufgenommen und diese gemittelt werden. Anschaulich wird beispielsweise ein Grünstich im Film durch einen schmaleren Grün-Bereich kompensiert.

In einer weiteren bevorzugten Ausführungsform sind die photosensitiven Sensoren als Zeilen-Sensoren ausgebildet, wobei jeweils ein Sensor dem roten, dem grünen und dem blauen Spektralbereich zugeordnet ist. Soll hierbei auch eine derartige Spektralanpassung möglich sein, so muss nur der Sensor zum Spektral-Zerlegeelement relativ verschiebbar angeordnet sein. Dabei ist es auch möglich, eine Anordnung mit Zeilen und Matrix zu kombinieren, indem beispielsweise der Matrix-Sensor nur zur Kalibration dient. Hierzu muss dieser nicht eine extrem hohe Auflösung aufweisen, sondern dient nur dazu, die spektrale Verteilung des Filmmaterials zu ermitteln. Anschließend werden dann die hochauflösenden Zeilen zu den Spektralbereichen justiert.

In einer weiteren bevorzugten Ausführungsform ist vor den photosensitiven Sensoren mindestens eine Blendenanordnung angeordnet, die vorzugsweise verstellbar ausgebildet ist. Die Blendenanordnung ist dabei weiter vorzugsweise zwischen dem Spektral-Zerlegeelement und der Abbildungsoptik angeordnet. Durch entsprechende Verstellung der Blendenanordnung kann dann ebenfalls eine spektrale Anpassung erfolgen.

Die Erfindung wird nachfolgend anhand eines bevorzugten Ausführungsbeispieles näher erläutert. Die einzige Figur zeigt eine schematische Anordnung eines Filmscanners.

Der Filmscanner 1 umfasst eine nicht dargestellte Weißlichtquelle, eine erste Abbildungsoptik 2, eine Filmbühne 3, einen Filmantrieb 4, eine zweite Abbildungsoptik 5, ein Spektral-Zerlegeelement 6, eine dritte Abbildungsoptik 7 und eine Fokalebene 8, auf der drei zeilenförmige photosensitive Sensoren 9 angeordnet sind. Dabei handelt es sich beispielsweise um panchromatische CCD- oder CMOS-Zeilensensoren. Das von der Weißlichtquelle emittierte Licht wird parallelisiert und über die erste Abbildungsoptik 2 auf einen spaltförmigen Durchbruch in der Filmbühne 3 abgebildet. Über dem Filmantrieb 4 wird der abzutastende Film 10 kontinuierlich am spaltförmigen Durchbruch vorbeigeführt. Die zweite Abbildungsoptik 5 bildet dann die Abbildung des Durchbruchs auf das Spektral-Zerlegeelement 6 ab, das beispielsweise als Prisma ausgebildet ist. Über die dritte Abbildungsoptik 7 werden dann die blauen Spektralanteile auf den ersten Sensor 9, die grünen Spektralanteile auf den zweiten Sensor 9 und die roten Spektralanteile auf den dritten Sensor 9 abgebildet. Durch nicht dargestellte Blendenanordnungen zwischen dem Spektral-Zerlegeelement 6 und der Abbildungsoptik 7 können die Spektralbereiche, die auf die Sensoren 9 abgebildet werden, noch filmspezifisch eingegrenzt werden, so dass beispielsweise Überlappungen der Spektralbereiche vermieden werden.

## Patentansprüche

1. Filmscanner für farbige Bildvorlagen, umfassend eine Weißlichtquelle, eine Filmbühne und mindestens einen photosensitiven Sensor, wobei die Filmbühne mindestens einen spaltförmigen Durchbruch aufweist, der Durchbruch von der Weißlichtquelle ausgeleuchtet wird und die farbigen Bildvorlagen über die Filmbühne bewegbar sind,
**dadurch gekennzeichnet, dass**
zwischen der Filmbühne (3) und dem mindestens einen photosensitiven Sensor (9) ein Spektral-Zerlegeelement (6) angeordnet ist, mittels dessen die Abbildung der Bildvorlage spektral zerlegt wird, wobei der oder die photosensitiven Sensoren (9) derart ausgerichtet sind, dass die gewünschten Spektralbereiche auf den oder die photosensitiven Sensoren (9) treffen.

2. Filmscanner nach Anspruch 1, **dadurch gekennzeichnet, dass** das Spektral-Zerlegeelement (6) als Prisma oder Gitter ausgebildet ist.

3. Filmscanner nach Anspruch 1 oder 2, **dadurch gekennzeichnet, dass** zwischen der Filmbühne (3) und dem Spektral-Zerlegeelement (6) und/oder zwischen dem Spektral-Zerlegeelement (6) und dem photosensitiven Sensor (9) eine Abbildungsoptik (5, 7) angeordnet ist.

4. Filmscanner nach einem der vorangegangenen Ansprüche, **dadurch gekennzeichnet, dass** der photosensitive Sensor (9) als Matrix-Sensor ausgebildet ist.

5. Filmscanner nach einem der vorangegangenen Ansprüche, **dadurch gekennzeichnet, dass** die photosensitiven Sensoren (9) als mindestens drei Zeilen-Sensoren ausgebildet sind, wobei jeweils ein Sensor (9) dem roten, dem grünen und dem blauen Spektralbereich zugeordnet ist.

6. Filmscanner nach einem der vorangegangenen Ansprüche, **dadurch gekennzeichnet, dass** vor den photosensitiven Sensoren (9) mindestens eine Blendenanordnung angeordnet ist.

7. Filmscanner nach Anspruch 6, **dadurch gekennzeichnet, dass** die Blendenanordnung verstellbar ausgebildet ist.

8. Filmscanner nach einem der vorangegangenen Ansprüche, **dadurch gekennzeichnet, dass** die aufgenommenen Spektralbereiche in Abhängigkeit von a priori-Informationen über die spektralen Eigenschaften der Bildvorlage einstellbar sind.

9. Verfahren zur Abtastung von farbigen Bildvorlagen mittels einer Vorrichtung nach Anspruch 1, **dadurch gekennzeichnet, dass** in Abhängigkeit der spektralen Eigenschaften der Bildvorlage die Spektralbereiche eingestellt werden, die auf die photosensitiven Sensoren (9) treffen oder aus diesen ausgelesen werden.
